# EUROPÄISCHE PATENTANMELDUNG

(11) **EP 4 464 497 A1**
(43) Veröffentlichungstag der Anmeldung: **20.11.2024**
(21) Anmeldenummer: 23174123.2
(22) Anmeldetag: 17.05.2023
(51) Int. Cl.: B29C 45/44

(54) **SPRITZGUSSMASCHINE, VERFAHREN UND SPRITZGUSSWERKZEUG**

(71) Anmelder: Haidlmair Holding GmbH, 4542 Nussbach (AT)
(72) Erfinder: Sieberer-Kefer, Johannes-Peter, 4542 Nussbach (AT); Eckhart, Christian, 4560 Kirchdorf an der Krems (AT)
(74) Vertreter: Jell, Friedrich

(57) **Zusammenfassung**

Es wird eine Spritzgussmaschine, ein Verfahren und ein Spritzgusswerkzeug (1) mit zumindest einer, wenigstens eine Hinterschneidung (3a) aufweisenden Kavität (3) für ein Spritzgussteil (2) und mit einem Entformungsmechanismus zum Entformen des Spritzgussteils (2) gezeigt. Um die Standfestigkeit zu verbessern, wird vorgeschlagen, dass bei der Bewegung des Auswerfers (5) in Auswerfrichtung (A) die Mitnehmerpaarung (8) den Auswerfer (5) und den Schieber (4) miteinander durch einen, insbesondere ausschließlich durch, magnetischen Kraftschluss (9) koppelt.

## Beschreibung

Die Erfindung betrifft eine Spritzgussmaschine, ein Verfahren und ein Spritzgusswerkzeug mit zumindest einer, wenigstens eine Hinterschneidung aufweisenden Kavität für ein Spritzgussteil und mit einem Entformungsmechanismus zum Entformen des Spritzgussteils, wobei der Entformungsmechanismus einen Auswerfer, insbesondere Auswerferrahmen, und einen schräg zur Auswerfrichtung des Auswerfers geführten Schieber zum Freigeben des Spritzgussteils aufweist, wobei der Auswerfer und der Schieber eine Mitnehmerpaarung ausbilden, die bei einer Bewegung des Auswerfers in Auswerfrichtung den Auswerfer und den Schieber so lange miteinander koppelt, bis der Schieber eine Entkopplungsposition erreicht, bei der sich Auswerfer und Schieber voneinander entkoppeln.

Spritzgussteile mit Hinterschneidungen bedürfen beim Entformen einen schräg zur Auswerfrichtung des Auswerfers geführten Schieber am Spritzgusswerkzeug, damit das es aus einer Kavität des Spritzgusswerkzeugs freigegeben werden kann. Verschiedenste mechanische Entformungsmechanismen sind bekannt, mit denen die Bewegung von Auswerfer und Schieber zueinander abgestimmt werden kann, um Beschädigungen am Spritzgusswerkzeug beim Öffnen und/oder Schließen zu vermeiden. Beispielsweise ist aus der EP 2808151 B1 ein Entformungsmechanismus mit einem als Auswerferrahmen ausgebildeten Auswerfer und einem schräg zur Auswerfrichtung des Auswerfers geführten Schieber bekannt, der über eine Mitnehmerpaarung Auswerfer und Schieber in ihrer Bewegung zeitweise miteinander koppelt. Wird nun der Auswerfer in Auswerfrichtung bewegt, wird der Schieber über die Mitnehmerpaarung von einer miteinander gekoppelten Position bis zu einer voneinander entkoppelten Position bewegt. Hierzu bildet die Mitnehmerpaarung einen Formschluss zwischen Auswerfer und Schieber so lange aus, bis ein Vorsprung des schräg geführten Schiebers außer Eingriff mit dem Auswerfer steht.

Wird der Auswerfer in eine dazu entgegengesetzte Rückfahrrichtung bewegt, schlägt der Auswerfer an den Schieber an und führt diesen unter Verschnappen zu einem Formschluss wieder in die Spritzposition zurück.

Nachteilig ist der Schnappmechanismus der Mitnehmerpaarung konstruktiv vergleichsweise aufwendig - und zudem aufgrund eines Schnappmechanismus fehleranfällig. Mit Beschädigungen am Spritzgusswerkzeug ist zu rechnen, was die Standfestigkeit reduziert.

Die Erfindung hat sich daher die Aufgabe gestellt, die Standfestigkeit des Spritzgusswerkzeugs der eingangs geschilderten Art zu verbessern. Zudem soll der konstruktive Aufwand gering sein.

Die Erfindung löst die gestellte Aufgabe durch die Merkmale des Anspruchs 1.

Indem bei der Bewegung des Auswerfers in Auswerfrichtung die Mitnehmerpaarung den Auswerfer und den Schieber miteinander durch einen magnetischen Kraftschluss koppelt, kann auf mechanische Elemente zur Kopplung von Auswerfer und Schieber verzichtet werden - womit die Konstruktion besonders vereinfacht werden kann. Dies insbesondere dann, wenn Auswerfer und Schieber miteinander ausschließlich durch magnetischen Kraftschluss gekoppelt sind.

Besonders kann sich diese konstruktiv vergleichsweise stark vereinfachte Lösung allerdings dadurch auszeichnen, dass auf mechanische formschlüssige Verbindungen, wie Schnappmechanismen etc. verzichtet werden kann, was zu einem fehlerfrei arbeitenden Mechanismus zum Entformen des Spritzgussteils beim Öffnen des Spritzgussteils führen kann. Anhand der erfindungsgemäßen Mitnehmerpaarung ist daher nicht nur die Konstruktion des Spritzgusswerkzeugs weiter vereinfachbar, sondern auch dessen Standfestigkeit im Betrieb deutlich erhöhbar.

Die Konstruktion des Spritzgusswerkzeugs kann weiter vereinfacht werden, wenn der Auswerfer und/oder der Schieber zur Ausbildung des magnetischen Kraftschlusses zumindest ein, ein Magnetfeld erzeugendes Mittel aufweisen. Dieses ein Magnetfeld erzeugende Mittel kann beispielsweise ein Permanentmagnet sein.

Vorzugsweise ist das ein Magnetfeld erzeugende Mittel in zumindest einer Ausnehmung im Auswerfer und/oder im Schieber vorgesehen ist. Beispielsweise ist dieses Mittel in der Ausnehmung gegenüber einem äußeren Rand der Ausnehmung zurückspringend bis höchstens plan mit diesem Rand vorgesehen, damit das Mittel gegenüber Beschädigungen besser geschützt werden kann. Dies kann insbesondere dann von Vorteil sein, wenn es sich bei dem Mittel um Permanentmagneten handelt. Dieselben Vorteile können sich ergeben, wenn dieses Mittel höchstens plan mit diesem offenen Rand in der Ausnehmung angeordnet ist.

Beispielsweise weist der magnetische Kraftschluss eine magnetische Anzugsrichtung in Auswerfrichtung oder in Rückfahrrichtung des Auswerfers auf. Ist beispielsweise ein, ein Magnetfeld erzeugendes Mittel am Auswerfer vorgesehen, dann ist die magnetische Anzugsrichtung in Auswerfrichtung des Auswerfers vorteilhaft. Ist beispielsweise ein, ein Magnetfeld erzeugendes Mittel am Schieber vorgesehen, dann ist die magnetische Anzugsrichtung in Rückfahrrichtung es Auswerfers vorteilhaft.

Weist der Auswerfer und/oder der Schieber ein zur Auswerfrichtung geneigt, insbesondere normal, geführtes Mitnehmerteil aufweist, das eine Kontaktfläche der Mitnehmerpaarung ausbildet, kann ein Gleiten am mechanischen Kontakt zwischen Auswerfer und Schieber, was sich durch eine schräge Bewegung des Schiebers vom Auswerfer weg oder auch zum Auswerfer hin ergeben kann, vermindert werden. Beschädigungen, beispielsweise auch durch Abrieb am Auswerfer und Schieber, sind derart vermeidbar - was die Standfestigkeit des Spritzgusswerkzeugs weiter erhöhen kann.

Vorstehendes ist weiter verbesserbar, wenn die Mitnehmerführung des Mitnehmerteils derart ausgebildet ist, dass bei einer Bewegung des Auswerfers in Auswerfrichtung zumindest zwei einander gegenüberliegende und durch den magnetischen Kraftschluss zusammengehaltene Kontaktflächen der Mitnehmerpaarung relativ zueinander fixiert bleiben. Dies kann auch erreicht werden, wenn die Bewegung des Auswerfers in eine zur Auswerfrichtung entgegengesetzte Rückfahrrichtung erfolgt.

Die Konstruktion kann weiter vereinfacht werden, wenn das, das Magnetfeld erzeugende Mittel zumindest einen Teil der Kontaktfläche der Mitnehmerpaarung ausbildet.

Vorzugsweise weist die Mitnehmerpaarung einen vom Auswerfer vorspringenden, insbesondere auswechselbaren, ersten Steg aufweist, der in miteinander gekoppelter Position der Mitnehmerpaarung den Schieber überlappt. Damit kann der magnetische Kraftschluss zum Koppeln von Abstreifer und Schieber weiter optimieren werden. Vorzugsweise ist dieser Steg am Schiebe auswechselbar.

Vorstehendes ist weiter verbesserbar, wenn die Mitnehmerpaarung einen vom Auswerfer vorspringenden, insbesondere auswechselbaren, ersten Steg aufweist, der in miteinander gekoppelter Position der Mitnehmerpaarung den Schieber überlappt.

Die Konstruktion kann vereinfacht werden, wenn zur Entkopplung der Mitnehmerpaarung die Führung des Schiebers einen Anschlag oder eine Arretierung aufweist, der/die bei der Bewegung des Auswerfers in Auswerfrichtung die Bewegung des Schiebers begrenzt. Beispielsweise ist der Anschlag als Anschlagfläche möglich. Die Arretierung kann beispielsweise ein Kugeldruckstück sein.

Vorzugsweise koppelt die Mitnehmerpaarung bei einer Bewegung des Auswerfers in eine zur Auswerfrichtung entgegengesetzte Rückfahrrichtung den Auswerfer und den sich in der Kopplungsposition befindliche Schieber miteinander durch den magnetischen Kraftschluss. Dies kann das Zurückschieben des Schiebers weiter erleichtern.

Das erfindungsgemäße Spritzgusswerkzeug eignet sich insbesondere für eine Spritzgussmaschine.

Die Erfindung hat sich zudem die Aufgabe gestellt, ein Verfahren zu Herstellung eines Spritzgussteils mit einem Spritzgusswerkzeug oder mit einer Spritzgussmaschine hinsichtlich seiner Standfestigkeit zu verbessern.

Die Erfindung löst die gestellte Aufgabe durch den Anspruch 13.

Indem im erfindungsgemäßen Verfahren das Spritzgussteil mit dem Entformungsmechanismus des Spritzgusswerkzeugs entformt wird, können Beschädigungen am Spritzgusswerkzeug vermieden und eine hohe Standzeit im Verfahren gewährleistet werden.

In den Figuren ist beispielsweise der Erfindungsgegenstand anhand einer Ausführungsvariante näher dargestellt. Es zeigen
- Fig. 1: einen schematischen Ablauf des Entformungsmechanismus zum Entformen eines Spitzgussteils aus einem Spritzgusswerkzeug,
- Fig. 2: eine vergrößerte Seitenansicht auf eine Mitnehmerpaarung des nach Fig. 1 dargestellten Entformungsmechanismus zum Zeitpunkt t2,
- Fig. 3a: eine Seitenansicht auf einen nach Fig. 1 und 2 dargestellten Steg eines Schiebers mit einem, ein Magnetfeld erzeugendes Mittel und
- Fig. 3b: eine Unteransicht der Fig. 3a.

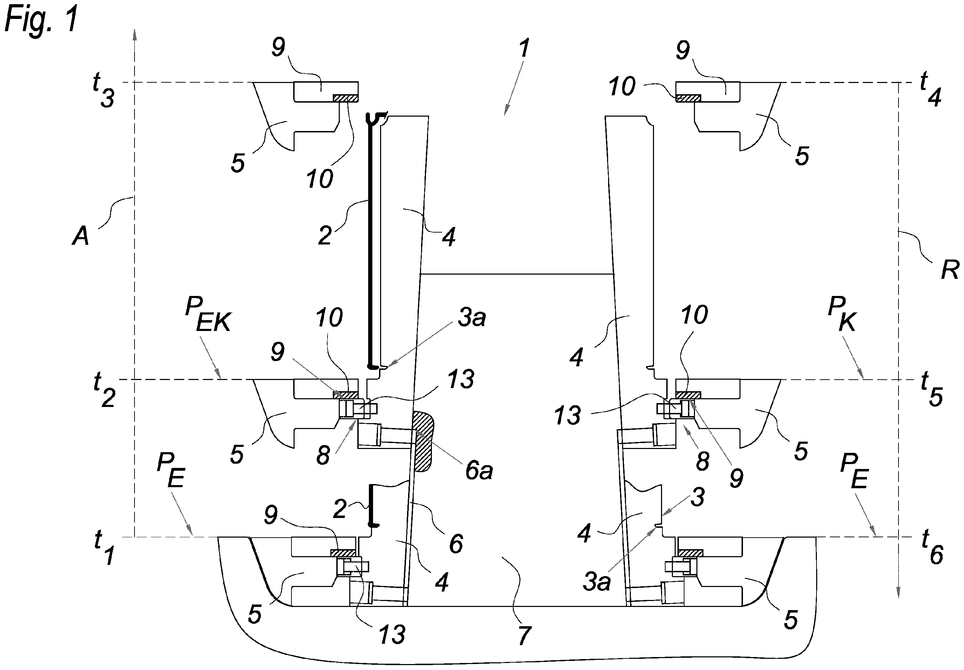

Nach Fig. 1 ist beispielsweise zu einem teilweise schematisch dargestellten Spritzgusswerkzeug 1 der Ablauf einer Entformung dargestellt, mit dem ein Spritzgussteil 2 aus der Kavität 3, die Hinterschneidungen 3a am Schieber 4 aufweist, entformt werden kann. Hierzu weist das Spritzgusswerkzeug 1 einen Entformungsmechanismus auf - wie nachfolgende beschrieben.

Das zu entformende Spritzgussteil 2 befindet sich zum Zeitpunkt t1 im geschlossenen Spritzgusswerkzeug 1. Der Schieber 4 befindet sich in Einspritzposition P_{E} am Spritzgusswerkzeug 1. Zum Öffnen des Spritzgusswerkzeugs 1 wird ein eine Rahmenform aufweisender Auswerfer 5 des Entformungsmechanismus in Auswerfrichtung A bewegt.

Der Auswerfer 5 ist mit dem Schieber 4, der dem Entformungsmechanismus zugehört, gekoppelt und bewegt damit den Schieber 4 mit - und zwar entlang einer Führung 6 zwischen Schieber 4 und Kern 7 des Spritzgusswerkzeugs 1, welche Führung 6 schräg zur Auswerfrichtung A des Auswerfers 5 verläuft. Damit wird eine Hinterschneidung 3a am Spritzgussteil 2 ausreichend freigestellt, um das Spritzgussteil 2 aus dem Spritzgusswerkzeug 1 zu entformen.

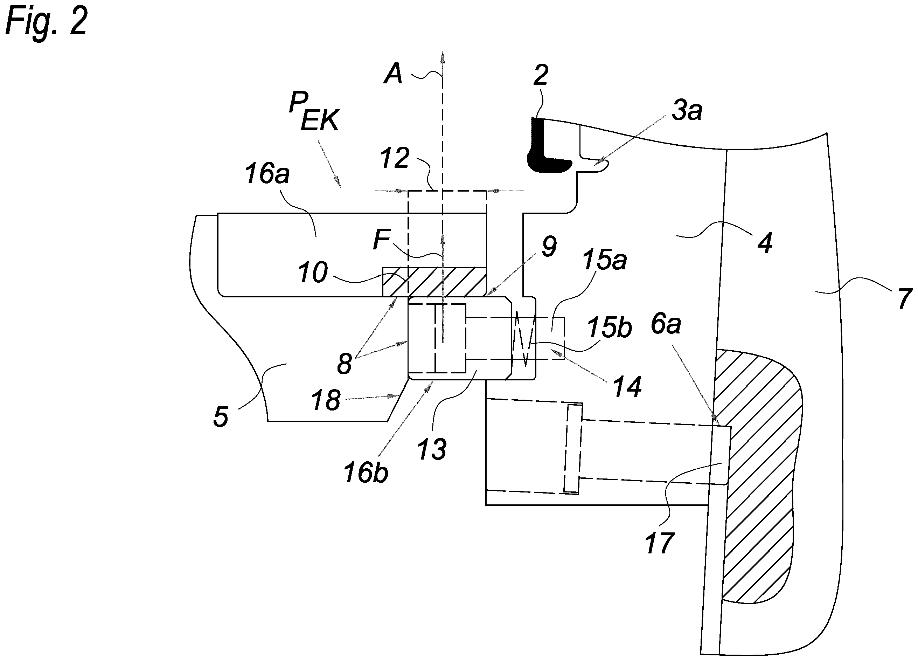

Für die genannte Mitbewegung bilden Auswerfer 5 und Schieber 4 eine Mitnehmerpaarung 8 aus, die in Fig. 2 im Detail in dargestellt ist. Die Mitnehmerpaarung 8 koppelt bei einer Bewegung des Auswerfers 5 in Auswerfrichtung A den Auswerfer 5 und den Schieber 4 so lange miteinander, bis der Schieber 4 seine Entkopplungsposition P_{EK} am Spritzgusswerkzeug 1 erreicht, welche dem Zeitpunkt t2 in der Fig. 1 entspricht. Ab dem Zeitpunkt t2 bewegt sich beim Entformen des Spritzgussteils 2 der Auswerfer 5 frei vom Schieber 4 - wie dies beispielsweise im Zeitpunkt t3 der Fig. 1 zu erkennen ist.

Die Kopplung und Entkopplung des Auswerfers 5 und Schiebers 4 bedarf einer robusten Konstruktion. Erfindungsgemäß wird dies ermöglicht, indem bei der Bewegung des Auswerfers 5 in Auswerfrichtung A die Mitnehmerpaarung 8 den Auswerfer 5 und den Schieber 4 miteinander ausschließlich durch magnetischen Kraftschluss 9 koppelt.

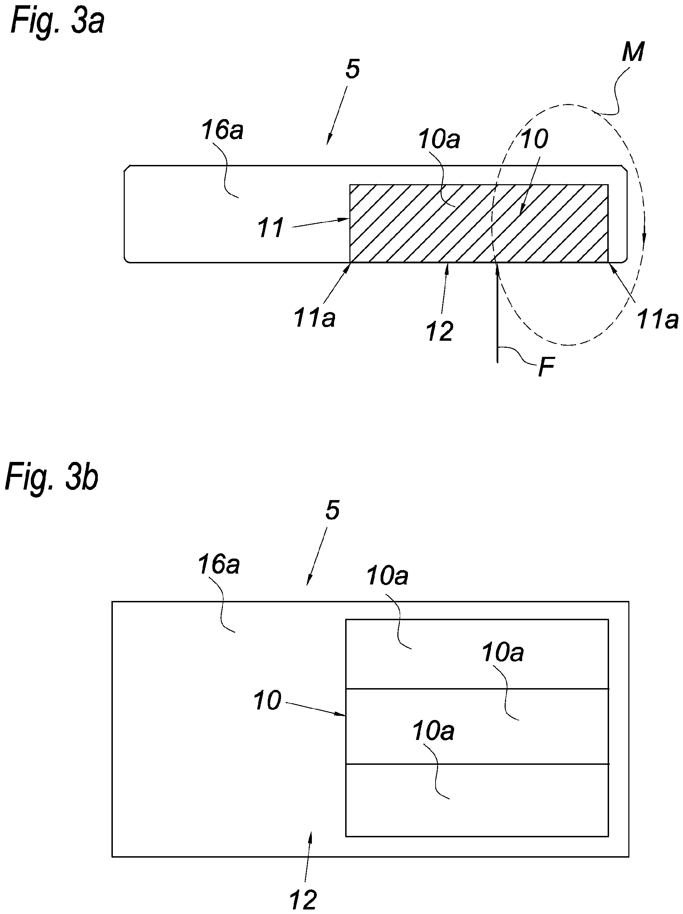

Zur Ausbildung des magnetischen Kraftschlusses 9 weist der Auswerfer 5 ein, ein Magnetfeld M erzeugendes Mittel 10, nämlich Permanentmagneten 10a, auf. Diese in Fig. 3a und 3b näher dargestellten Permanentmagneten 10a sind im Auswerfer 5 eingebettet - und zwar in einer Ausnehmung 11 des Auswerfers 5. Die entsprechende Ausnehmung kann aber auch am Schieber 4 vorgesehen sein. Die Permanentmagneten 10a sind in der Ausnehmung 11 plan mit einem äußeren Rand 11 der Ausnehmung 11 angeordnet.

Damit sind die Permanentmagneten 10a Teil einer Kontaktfläche 12 der Mitnehmerpaarung 8, wie in den Figuren 3a und 3b zu erkennen.

Durch diese Anordnung - wie in den Figuren 1 bis 3b dargestellt - weist der magnetische Kraftschluss 9 eine magnetische Anzugsrichtung F in Auswerfrichtung A des Auswerfers 5 auf.

Um Beschädigungen an der Mitnehmerpaarung 8 zu vermeiden, weist der Schieber 4 ein Mitnehmerteil 13 auf, das über eine Mitnehmerführung 14 zur Auswerfrichtung A normal geneigt (90 Grad) geführt wird und das auch eine Kontaktfläche 12 an der Mitnehmerpaarung 8 ausbildet. Das an einem Stift 15a der Mitnehmerführung 14 des Schiebers 4 geführte Mitnehmerteil 13 wird über eine Feder 15b nach außen gedrückt, um so die Kontaktfläche 12 an Auswerfer 5 und Schieber 4 zu fixieren, auch wenn der Schieber 4 sich schräg vom Auswerfer 5 wegbewegt.

Die Mitnehmerpaarung 8 ist auch vergleichsweise robust ausgebildet. Hierfür weist die Mitnehmerpaarung 8 einen am Auswerfer 5 vorspringenden und auswechselbaren ersten Steg 16a sowie einen am Schieber 4 vorspringenden und auswechselbaren zweiten Steg 16b auf. Der zweite Steg 16b wird vom beweglich gelagerten Mitnehmerteil 13 ausgebildet.

Zudem überlappen einander der erste und der zweite Steg 16a, 16b in gekoppelter Position der Mitnehmerpaarung 8 - wie in den Figuren 1 und 2 zu erkennen.

Außerdem ist in Fig. 1 zu erkennen, dass zum Zeitpunkt t2 der Schieber 4 mit seinem Führungselement 17 an einen Anschlag 6a der Führung 6 anschlägt, was eine Entkopplung der Mitnehmerpaarung 8 zu diesem Zeitpunkt sicherstellt, da trotz einer Weiterbewegung des Auswerfers 5 in Auswerfrichtung A die Bewegung des Schiebers 4 entlang der Führung 6 begrenzt wird.

Zudem kann der Fig. 1 das Schließen des Spritzgusswerkzeugs 1 nach dem Entformen des Spritzgussteils 2 entnommen werden.

Zum Zeitpunkt t4 wird der Auswerfer 5 in eine zur Auswerfrichtung A entgegengesetzte Rückfahrrichtung R bewegt.

Zum Zeitpunkt t5 kommt der Auswerfer 5 in Kontakt mit dem Schieber 4 bzw. mit dessen über die Feder 15 ausgefahrenen Mitnehmerteil 13, wobei eine Feder aufgrund der schräg zulaufenden Flanke 18 des Schiebers 4 nicht zwingend notwendig ist, welche Flanke 18 in Fig. 2 bezeichnet worden ist.

Die Mitnehmerpaarung 8 befindet sich damit in einer Kopplungsposition P_{K}. Auch bei dieser Bewegung - also in Rückfahrrichtung R - koppelt die Mitnehmerpaarung 8 den Auswerfer 5 und den Schieber 4 miteinander durch den magnetischen Kraftschluss 9 zum Zeitpunkt t5. Damit bewegt sich das Mitnehmerteil 14 am Schieber mit, was den Verschleiß an der Mitnehmerpaarung 8 durch zueinander lagefixierte Kontaktflächen vermindert. Der Schieber 4 wird über die Führung 6 zum Auswerfer 5 schräg zubewegt.

Zum Zeitpunkt t6 ist das Spritzgusswerkzeug 1 geschlossen und wird gegebenenfalls für einen neuen Einspritzvorgang verriegelt. Der Schieber befindet sich zu diesem Zeitpunkt wieder in seiner Einspritzposition P_{E}.

## Patentansprüche

1. Spritzgusswerkzeug (1) mit zumindest einer, wenigstens eine Hinterschneidung (3a) aufweisenden Kavität (3) für ein Spritzgussteil (2) und mit einem Entformungsmechanismus zum Entformen des Spritzgussteils (2), wobei der Entformungsmechanismus einen Auswerfer (5), insbesondere Auswerferrahmen, und einen schräg zur Auswerfrichtung (A) des Auswerfers (5) geführten Schieber (4) zum Freigeben des Spritzgussteils (2) aufweist, wobei der Auswerfer (5) und der Schieber (4) eine Mitnehmerpaarung (8) ausbilden, die bei einer Bewegung des Auswerfers (5) in Auswerfrichtung (A) den Auswerfer (5) und den Schieber (4) so lange miteinander koppelt, bis der Schieber (4) eine Entkopplungsposition (P_{EK}) erreicht, bei der sich Auswerfer (5) und Schieber (4) voneinander entkoppeln, **dadurch gekennzeichnet, dass** bei der Bewegung des Auswerfers (5) in Auswerfrichtung (A) die Mitnehmerpaarung (8) den Auswerfer (5) und den Schieber (4) miteinander durch einen, insbesondere ausschließlich durch, magnetischen Kraftschluss (9) koppelt.

2. Spritzgusswerkzeug nach Anspruch 1, **dadurch gekennzeichnet, dass** der Auswerfer (5) und/oder der Schieber (4) zur Ausbildung des magnetischen Kraftschlusses (9) zumindest ein, ein Magnetfeld (M) erzeugendes Mittel (10), insbesondere einen Permanentmagneten (10a), aufweisen.

3. Spritzgusswerkzeug nach Anspruch 2, **dadurch gekennzeichnet, dass** das das Magnetfeld (M) erzeugende Mittel (10) in zumindest einer Ausnehmung (11) im Auswerfer (5) oder im Schieber (4), insbesondere gegenüber einem äußeren Rand (11a) der Ausnehmung (11) zurückspringend bis höchstens plan mit diesem Rand (11a), vorgesehen ist.

4. Spritzgusswerkzeug nach einem der Ansprüche 1 bis 3, **dadurch gekennzeichnet, dass** der magnetische Kraftschluss (9) eine magnetische Anzugsrichtung (F) in Auswerfrichtung (A) oder in Rückfahrrichtung (R) des Auswerfers (5) aufweist.

5. Spritzgusswerkzeug nach einem der Ansprüche 1 bis 4, **dadurch gekennzeichnet, dass** der Auswerfer (5) und/oder der Schieber (4) ein zur Auswerfrichtung (A) geneigt, insbesondere normal, geführtes Mitnehmerteil (13) aufweist, das eine Kontaktfläche (12) der Mitnehmerpaarung (8) ausbildet.

6. Spritzgusswerkzeug nach Anspruch 5, **dadurch gekennzeichnet, dass** die Mitnehmerführung (14) des Mitnehmerteils (13) derart ausgebildet ist, dass bei einer Bewegung des Auswerfers (5) in Auswerfrichtung (A) und/oder in eine zur Auswerfrichtung (A) entgegengesetzte Rückfahrrichtung (R) zumindest zwei einander gegenüberliegende und durch den magnetischen Kraftschluss (9) zusammengehaltene Kontaktflächen (12) der Mitnehmerpaarung (8) relativ zueinander fixiert bleiben.

7. Spritzgusswerkzeug nach Anspruch 5 oder 6, **dadurch gekennzeichnet, dass** das, das Magnetfeld (M) erzeugende Mittel (10) zumindest einen Teil der Kontaktfläche (12) der Mitnehmerpaarung (8) ausbildet.

8. Spritzgusswerkzeug nach einem der Ansprüche 1 bis 7, **dadurch gekennzeichnet, dass** die Mitnehmerpaarung (8) einen vom Auswerfer (5) vorspringenden, insbesondere auswechselbaren, ersten Steg (16a) aufweist, der in miteinander gekoppelter Position der Mitnehmerpaarung (8) den Schieber (4) überlappt.

9. Spritzgusswerkzeug nach Anspruch 8, **dadurch gekennzeichnet, dass** die Mitnehmerpaarung (8) einen am Schieber (4) vorspringenden, insbesondere auswechselbaren, zweiten Steg (16b) aufweist, wobei der erste und der zweite Steg (16a, 16b) einander in miteinander gekoppelter Position der Mitnehmerpaarung (8) überlappen.

10. Spritzgusswerkzeug nach einem der Ansprüche 1 bis 9, **dadurch gekennzeichnet, dass** zur Entkopplung der Mitnehmerpaarung (8) die Führung (6) des Schiebers (4) einen Anschlag (6a) oder eine Arretierung aufweist, der/die bei der Bewegung des Auswerfers (5) in Auswerfrichtung (A) die Bewegung des Schiebers (4) begrenzt.

11. Spritzgusswerkzeug nach einem der Ansprüche 1 bis 10, **dadurch gekennzeichnet, dass** die Mitnehmerpaarung (8) bei einer Bewegung des Auswerfers (5) in eine zur Auswerfrichtung (A) entgegengesetzte Rückfahrrichtung (R) den Auswerfer (5) und den sich in der Kopplungsposition (P_{K}) befindlichen Schieber (4) miteinander durch den magnetischen Kraftschluss (9) koppelt.

12. Spritzgussmaschine mit dem Spritzgusswerkzeug (1) nach einem der Ansprüche 1 bis 11.

13. Verfahren zur Herstellung eines Spritzgussteils (2) mit einem Spritzgusswerkzeug (1) nach einem der Ansprüche 1 bis 11 oder mit einer Spritzgussmaschine nach Anspruch 12, bei dem das Spritzgussteil (2) mit dem Entformungsmechanismus des Spritzgusswerkzeugs (1) entformt wird.
